# EUROPEAN PATENT APPLICATION

(11) **EP 2 120 311 A1**
(43) Date of publication of application: **18.11.2009**
(21) Application number: 08156153.2
(22) Date of filing: 14.05.2008
(51) Int. Cl.: H02J 7/35

(54) **Solar power charging device with self-protection function**

(71) Applicant: Nien Made Enterprise Co., Ltd., Nantun District, Taichung City (TW)
(72) Inventor: Lin, Chih-Chang, Nantun District, Taichung City (TW)
(74) Representative: Lermer, Christoph

(57) **Abstract**

A solar power charging device with a self-protection function is provided, which includes a solar cell, a rechargeable battery, and a diode. The solar cell defines an open-circuit voltage Voc and an operating voltage Vop, in which the Voc is slightly higher than the Vop. The rechargeable battery defines a battery voltage, an operating voltage of load Vload, and a maximum charging voltage Vf, in which the Vf is substantially equal to the V_{oc}. The diode has an anode connected to the solar cell and a cathode connected to the rechargeable battery. When the battery voltage of the rechargeable battery is lower than the Vop, the solar cell provides the rechargeable battery a fully-efficient charging current. When the battery voltage is raised to be equal to the Voc, the solar cell provides the rechargeable battery a charging current of zero, thus preventing the rechargeable battery from being overcharged.

## Description

### BACKGROUND OF THE INVENTION

### Field of the Invention

The present invention relates to a solar power charging device with a self-protection function, in particular to a charging device capable of preventing overcharge employing physical properties of a solar cell and a rechargeable battery by selecting a suitable open-circuit voltage of the solar cell and maximum charging voltage of the rechargeable battery.

### Related Art

Since rechargeable batteries capable of being charged and reused repeatedly have been designed in the industry, the consumption of primary batteries and environment pollution caused thereby have been effectively reduced. However, when the electric energy of the rechargeable battery is not enough, it must be taken down for charging, which causes inconvenience in use. Furthermore, due to shortage of energy sources, the solar energy, as a convenient and free energy source without pollution, has become a main trend for the new energy sources.

A conventional solar power unit includes a plurality of solar cells arranged in an array and is connected to an overcharge and over-discharge protection controller, a rechargeable battery, and an inverter (for converting a DC current into an AC current), thus forming a solar power system, or a solar power station. Generally, in the design of a solar charging module, the rechargeable battery is mainly designed to be fully charged, so that a solar cell with an operating voltage (when charging a rechargeable battery with a voltage lower than this operating voltage, the solar cell can achieve a charging efficiency of 100%) slightly higher than a maximum charging voltage of the rechargeable battery is selected to ensure the full charge of the rechargeable battery. As a result, the open-circuit voltage of the solar cell is higher than the operating voltage of the solar cell by about 30%, so that it is worried that the rechargeable battery may be overcharged. Therefore, it is necessary to add a battery overcharge protection circuit or control device, so as to avoid taking the risk of being burnt out due to the overcharge of battery, as disclosed in Patents US20050083018, US3921049, and TWI290406.

However, as for common consumer electronic products (especially those products with constant daily consumption of electricity), merely a charging device that is not too large in size and used for charging with DC is needed. The structure mentioned above must employ an overcharge protection and control device to protect the battery, as a result, not only the members are complex and the cost cannot be reduced, but also there is a risk of component failure. Therefore, currently, how to reduce the elements (overcharge and over-discharge controller) to realize a simple and reliable solar charger is an urgent issue in the solar charger field.

### SUMMARY OF THE INVENTION

Accordingly, the present invention is directed to a solar charger with a self-protection function, which utilizes the matching effect between an open-circuit voltage of a solar cell and a voltage of a rechargeable battery to avoid overcharge without adding an overcharge protection device additionally, such that the rechargeable battery supplies voltage continuously or is charged continuously, and the safety and service life of the rechargeable battery are not affected.
The present invention provides a solar charger with a self-protection function, which includes a solar cell, a rechargeable battery, a load device, and a diode. The solar cell has a positive output terminal and a negative output terminal and defines an open-circuit voltage and an operating voltage, in which the open-circuit voltage is slight higher than the operating voltage. The rechargeable battery defines a battery voltage and a maximum charging voltage. The load device defines an operating voltage, in which the operating voltage of the solar cell is slightly higher than the operating voltage of the load device. The diode has an anode connected to a positive electrode of the solar cell and a cathode electrically connected to a positive electrode of the rechargeable battery.

When the battery voltage of the rechargeable battery is lower than the operating voltage of the solar cell, the solar cell provides the rechargeable battery a fully-efficient charging current (a maximal charging current that can be provided by the solar cell under the same intensity of illumination), such that the electric energy of the rechargeable battery consumed by the load device can be compensated by the solar cell rapidly, and thus the rechargeable battery can keep powering the load device continuously. When the battery voltage of the rechargeable battery is raised to be equal to the open-circuit voltage of the solar cell, the solar cell provides the rechargeable battery a charging current of zero. Therefore, the voltage of the rechargeable battery never exceeds its maximum charging voltage, and thus ensuring the safety of the rechargeable battery.

The open-circuit voltage of the solar cell is approximately higher than the operating voltage of the solar cell by 30%, and generally by 10%-50%.

Since the common solar photovoltaic products are mostly designed to have the rechargeable batteries being fully charged, in order to avoid the overcharge circumstance, a schottky diode is installed at a terminal of the solar cell merely when the solar output current is lower than 300 mA and the rechargeable battery is a low-volume and low-density battery, such as a lead acid battery, so as to prevent the current within the rechargeable battery from reversely flowing back to the solar cell, and to be directly connected to a rechargeable battery for use. However, with the structure of the present invention, even when the solar output current is higher than 300 mA or the rechargeable battery is a high-volume and high-density battery, such as a lithium battery, a self-protection effect for the solar charger can be achieved by selecting a suitable solar cell and a rechargeable battery.

### BRIEF DESCRIPTION OF THE DRAWINGS

The present invention will become more fully understood from the detailed description given herein below for illustration only, which thus is not limitative of the present invention, and wherein:
FIG. 1 is a schematic view of a solar charger according to the present invention;
FIG. 2 is a charge-discharge curve of a solar cell and a rechargeable battery according to the present invention; and
FIG. 3 is a charge-discharge curve of a solar cell and a rechargeable battery according to an embodiment of the present invention.

### DETAILED DESCRIPTION OF THE INVENTION

Hereinafter, the preferred embodiments of the present invention are illustrated in detail with reference to the accompanying drawings.

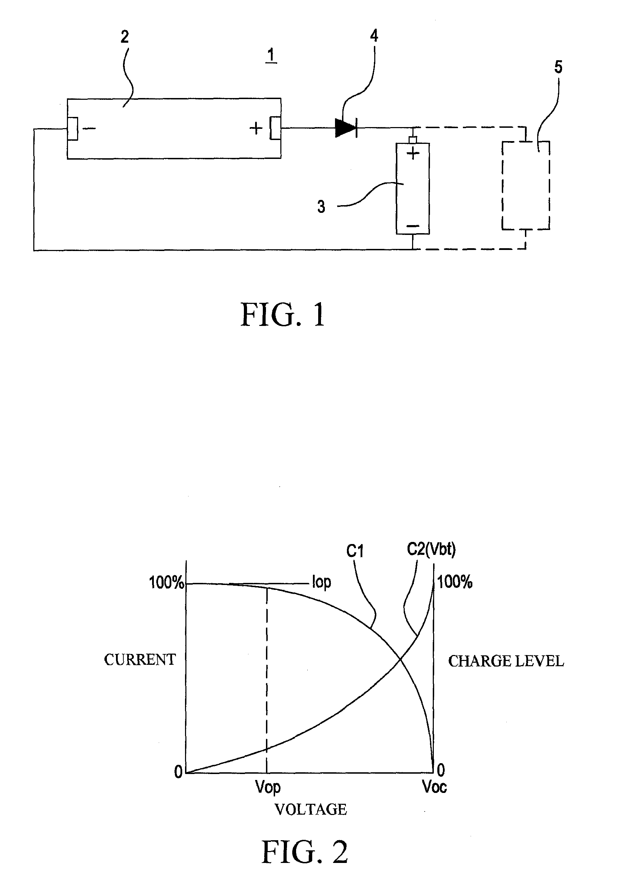

FIG. 1 is a schematic view of a solar charger according to the present invention. Referring to FIG. 1, a solar charger 1 includes a solar cell 2, a rechargeable battery 3, and a diode 4. The solar cell 2 has a positive output terminal and a negative output terminal, and defines an open-circuit voltage Voc (a voltage directly measured by a voltage meter when the solar cell is not connected to any load device) and an operating voltage Vop (a voltage when the solar cell is connected to a load device during operation). The rechargeable battery 3 defines a battery voltage Vbt (a voltage measured across two terminals of the battery at any time) and a maximum charging voltage Vf (a voltage when the battery is fully charged), in which the open-circuit voltage Voc is substantially equal to the maximum charging voltage Vf of the battery. The diode 4 has an anode connected to a positive electrode of the solar cell 2 and a cathode connected to a positive electrode of the rechargeable battery 3. Furthermore, the rechargeable battery 3 is further connected to a load device 5 to drive the load device 5 to actuate with the battery voltage Vbt. The load device 5 defines an operating voltage of load Vload (a voltage when the load device 5 works normally), and the operating voltage of load Vload should be not higher than the operating voltage Vop of the solar cell.

The charging principle of the solar cell 2 to charge the rechargeable battery 3 lies in that, as the open-circuit voltage Voc of the solar cell 2 is higher than the battery voltage Vbt of the rechargeable battery 3, a voltage drop is generated between the solar cell 2 and the rechargeable battery 3, so that the current flows to the rechargeable battery 3 for charging. When there is no sunlight at night, the output voltage of the solar cell 2 is lower than the battery voltage Vbt of the rechargeable battery, the current of the rechargeable battery 3 is prevented from flowing back to the solar cell 2 through the anti-reversing effect of the diode 4 disposed between the rechargeable battery 3 and the solar cell 2, thus protecting the solar cell 2 from being damaged. When the battery voltage Vbt is raised to be equal to the open-circuit voltage Voc, there is no voltage drop between the solar cell and the rechargeable battery 3, so that the charging current is zero. Furthermore, the open-circuit voltage Voc of the selected solar cell 2 is substantially equal to the maximum charging voltage Vf of the rechargeable battery, and thus, when the battery voltage Vbt is raised to be equal to its maximum charging voltage Vf, the charging current is approaching zero. Therefore, naturally, the solar cell 2 does not overcharge the rechargeable battery 3, and thereby it is unnecessary to limit the output current of the solar cell 2 to be lower than 300 mA as that in the prior art. Even if the output current of the solar cell 2 is higher than 300 mA, the self-protection efficacy still can be achieved by selecting a suitable solar cell 2 to be matched with the rechargeable battery 3.

Generally, in the design of solar charging modules, the rechargeable battery is mainly considered to be fully charged, so when selecting a solar cell, the one with an operating voltage Vop (a voltage when the solar cell provides a maximal charging current that it can be provided under the same intensity of illumination) higher than the maximum charging voltage Vf of the rechargeable battery is selected, so as to ensure the rechargeable battery be fully charged. Accordingly, the open-circuit voltage Voc of the solar cell is generally higher than the operating voltage Vop of the solar cell by about 30%, so that it is worried that the rechargeable battery may be overcharged. Therefore, a battery overcharge protection circuit is added to ensure that no risk occurs to the battery due to the overcharge.

According to the present invention, in order to enable the solar cell to have desirable charging efficiency at the operating voltage of load Vload of the load device 5 and not to worry about overcharging the rechargeable battery, a solar cell having an operating voltage Vop similar to the operating voltage Vload of the load device 5 is selected. Since the operating voltage Vop of the solar cell is lower than that of a commonly designed solar cell by about 30%, that is, the number of the serially-connected solar cells is reduced (upon being converted into area, it is reduced by about 30%), and the cost is also reduced.

FIG. 2 is a charge-discharge curve of a solar cell and a rechargeable battery according to the present invention. Referring to FIG. 2, a current-voltage curve (I-V curve) of the solar cell 2 is C1, and an electricity-voltage curve of a rechargeable battery 3 is C2. When the battery voltage Vbt of the rechargeable battery 3 is lower than the operating voltage Vop of the solar cell 2, the solar cell has a maximal charging efficiency, that is, the charging current reaches 100% of the operating current Iop of the selected solar cell. With the raising of the battery voltage Vbt of the rechargeable battery 3, the charging efficiency of the solar cell 2 is decreased. When the battery voltage Vbt of the rechargeable battery 3 is raised to be equal to the open-circuit voltage Voc of the solar cell 2, there is no voltage drop between the solar cell 2 and the rechargeable battery 3, the charging current provided by the solar cell 2 is approximately zero. That is to say, when the rechargeable battery 3 is at a low voltage, as long as merely a small amount of electricity is supplied, the battery voltage Vbt is significantly increased; and when the battery voltage Vbt of the rechargeable battery 3 is approaching a saturation state, the battery voltage Vbt is slightly increased even if the charging time and the charge level are increased a lot.

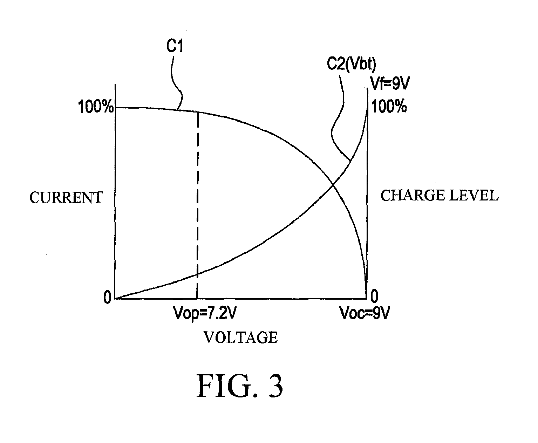

FIG. 3 is a charge-discharge curve of a solar cell and a rechargeable battery according to an embodiment of the present invention. Referring to FIG. 3, the curve and relevant reference numerals in the figure are the same as that in FIG. 2. Referring to FIG. 1 together, the operating voltage Vload of the load device 5 is 6.5 V. In order to meet the requirements of the operation of the load device 5, a rechargeable battery 3 with a maximum charging voltage Vf of 9 V (the applicable voltage range is 7.2V-9 V) is selected, and according to the battery voltage Vbt of the rechargeable battery 3, a solar cell 2 with an open-circuit voltage Voc of about 9 V and an operating voltage Vop of about 7.2 V is selected. When the battery voltage Vbt is dropped to be lower than 7.2 V, the rechargeable battery 3 has a charging efficiency of approximate 100%, and thus the rechargeable battery 3 can easily maintain a voltage required by the load device 5 during operation. When the battery voltage Vbt is raised to be higher than 7.2 V, the charging efficiency is decreased gradually. Finally, when the battery voltage Vbt of the rechargeable battery 3 reaches to be the same as its maximum charging voltage Vf of 9V, the charging efficiency of the solar cell 2 is decreased to zero. Therefore, an overcharge protection effect of the rechargeable battery can be achieved without adding any protection circuit additionally.

With the structure and operation principle mentioned above, the solar charger has an overcharge protection effect by selecting a suitable solar cell and a rechargeable battery. That is, when the battery voltage of the rechargeable battery is dropped and approaches the operating voltage of the solar cell, the solar cell provides a higher charging current to compensate the electricity of the rechargeable battery rapidly, and the battery voltage of the rechargeable battery is raised rapidly and can be recovered rapidly to maintain the operating voltage of load for driving the load device. That is, even at a low voltage, the rechargeable battery can be easily charged to meet the requirements for the load device during operation. When the battery voltage of the rechargeable battery is raised, the charging current of the solar cell is dropped, and when the battery voltage of the rechargeable battery is approaching the open-circuit voltage of the solar cell, the charging current of the solar cell is dropped to zero. That is, when the maximum charging voltage of the rechargeable battery is approaching the open-circuit voltage of the solar cell, the rechargeable battery will never be overcharged, but naturally generates an overcharge protection effect on the battery. In such a manner, the overcharge protection circuit installed in the rechargeable battery can be omitted, and thus reducing the cost. Furthermore, the overcharge protection effect is achieved by utilizing the physical properties of the solar cell and the rechargeable battery (the matching effect between voltages) without requiring other control or protection circuits, and thus the cost is reduced, and the configuration is simple and reliable (the component failure does not occur since no other circuit components are required).

It will be apparent to those skilled in the art that various modifications and variations can be made to the structure of the present invention without departing from the scope or spirit of the invention. In view of the foregoing, it is intended that the present invention covers modifications and variations of this invention provided they fall within the scope of the following claims and their equivalents.

## Claims

1. A solar power charging device with a self-protection function, comprising:
a solar cell (2), having a positive output terminal and a negative output terminal, and defining an open-circuit voltage and an operating voltage, wherein the open-circuit voltage is slightly higher than the operating voltage;
a rechargeable battery (3), defining a battery voltage and a maximum charging voltage, wherein the maximum charging voltage and the open-circuit voltage of the solar cell (2) are set a predetermined value, to control a charging voltage not to exceed the maximum charging voltage; and
a diode (4), having an anode electrically connected to a positive electrode of the solar cell and a cathode electrically connected to a positive electrode of the rechargeable battery (3).

2. The solar power charging device with a self-protection function according to claim 1, wherein the open-circuit voltage of the solar cell is higher than the operating voltage of the solar cell by 10% to 50%.

3. The solar power charging device with a self-protection function according to claim 1, wherein when the battery voltage of the rechargeable battery (3) is lower than the operating voltage of the solar cell (2), the solar cell (2) charges the rechargeable battery (3) with a maximal charging current provided by the solar cell (2) under a certain illumination.

4. The solar power charging device with a self-protection function according to claim 3, wherein when the battery voltage is raised to be equal to the open-circuit voltage, the solar cell (2) charges the rechargeable battery (3) with a charging current of zero.
